# EUROPÄISCHE PATENTANMELDUNG

(11) **EP 0 638 355 A1**
(43) Veröffentlichungstag der Anmeldung: **15.02.1995**
(21) Anmeldenummer: 94112351.5
(22) Anmeldetag: 08.08.1994
(51) Int. Cl.: B01F 15/04

(54) **Dosiervorrichtung**

(30) Priorität: 13.08.1993 DE 9312134 U
(71) Anmelder: ULTRAKUST electronic GmbH, D-94239 Gotteszell (DE)
(72) Erfinder: Böhm, Alfred, D-94234 Viechtach (DE); Lerach, Dieter, D-94227 Zwiesel (DE)
(74) Vertreter: Heim, Hans-Karl, Dipl.-Ing.

(57) **Zusammenfassung**

Die Erfindung betrifft ein Verfahren und eine Dosiervorrichtung zur Zuführung eines Additivstoffes (2) in einen Volumenstrom eines Grundstoffes (44), insbesondere zur Additivierung eines Additivstoffes (2) beim Abfüllen von Heizöl aus einem mobilen Tankfahrzeug in Tanks. Eine Injektionseinrichtung, welche den Additivstoff (2) aus einem Vorratsbehälter (1) dem Volumenstrom des Grundstoffes (44) in einem vorgebbaren Mischungsverhältnis zuführt, und eine Steuereinrichtung (43) sind vorgesehen, welche das zu injizierende Volumen des Additivstoffes (2) in Abhängigkeit von dem Volumenstrom des Grundstoffes (44) bestimmt und regelt. Die Injektionseinrichtung ist eine Axialkolbenpumpe (15) mit Schrägscheibe (16), die einen Antrieb für eine Injektion des Additivstoffes (2) aufweist. Zur Einhaltung des Mischungsverhältnisses wird das Injektionsvolumen des Additivstoffes (2) durch die Steuereinrichtung (43) mittels Regelung des Antriebes, insbesondere eines Antriebsmotors (25), einem veränderlichen Volumenstrom des Grundstoffes (44) angepaßt.

## Beschreibung

Die Erfindung betrifft einerseits eine Dosiervorrichtung zur Zuführung eines Additivstoffes in einen Volumenstrom eines Grundstoffes, insbesondere zur Additivierung eines Stoffes beim Abfüllen von Heizöl aus einem mobilen Tankfahrzeug in Tanks, mit einer Injektionseinrichtung, welche den Additivstoff aus einem Vorratsbehälter dem Volumenstrom des Grundstoffes in einem vorgebbaren Mischungsverhältnis zuführt, und einer Steuereinrichtung, welche das zu injizierende Volumen des Additivstoffes in Abhängigkeit von dem Volumenstrom des Grundstoffes bestimmt und regelt und andererseits ein zugehöriges Verfahren.

Eine gattungsgemäße Dosiervorrichtung ist in der G 92 05 585 beschrieben. Bei dieser bekannten Dosiervorrichtung wird ein Additiv über druckluftbetriebene Kolben-Zylinder-Einheiten einem Heizölstrom in einer Abgabeleitung zugeführt. Zur Erzielung einer gerichteten Additivstoffströmung aus der sich ständig umkehrenden Hubbewegung der Kolben-Zylinder-Einheiten weist diese Dosiervorrichtung zahlreiche Additivstoffleitungen mit Rückschlagventilen auf. Mit dieser Dosiervorrichtung war es erstmals möglich, bei einem mobilen Tankfahrzeug während des Abfüllvorganges bei Heizöl eine dosierte Menge eines Additives zuzuführen.

Es hat sich jedoch gezeigt, daß die Verwendung druckluftbetriebener Kolben-Zylinder-Einheiten eine Beschränkung der Dosiergenauigkeit zur Folge hat. Aufgrund der Arbeitsweise der Kolben-Zylinder-Einheit mit den Totpunkten bei der Bewegungsumkehr kann keine gleichmäßige Additivstoffströmung erzeugt werden. Weiterhin ist die verwendete Druckluft als Antriebsmedium energieaufwendig und begrenzt den Einspritzdruck des Additivstoffes auf maximal 1,5 x 10⁶ Pa. Bei Grundstoffvolumenströmen mit vergleichbarem Druckniveau bildet sich in der Injektionseinrichtung ein Gegendruck auf, der eine genaue Dosierung des Additives beeinträchtigt.

Des weiteren hat sich gezeigt, daß die notwendigen zahlreichen Rückschlagventile eine nicht genau bestimmbare Auswirkung auf das Strömungsverhalten des Additives haben. Insbesondere bei sinkenden Temperaturen steigt der Druckverlust an den Rückschlagventilen stark an, so daß der gewünschte Einspritzdruck schwer beherrschbar wird. Problematisch ist auch die Aggressivität verschiedener Additivstoffe gegenüber Dichtungen, die bei Rückschlagventilen und Kolben eingesetzt werden. Die Rückschlagventile und vor allem die Kolben erfordern daher einen hohen Wartungsaufwand und sind auch nur für ausgewählte Additivmedien geeignet.

Es ist **Aufgabe** der Erfindung, eine Vorrichtung und ein Verfahren zu schaffen, mit welchen einem Volumenstrom eines Grundstoffes ein Additivstoff in einer hohen Dosiergenauigkeit zuführbar ist.

Die Vorrichtung betreffend wird die Aufgabe bei einer gattungsgemäßen Vorrichtung dadurch gelöst, daß die Injektionseinrichtung eine Axialkolbenpumpe mit Schrägscheibe aufweist, daß die Axialkolbenpumpe einen Antrieb für eine stetige Injektion des Additivstoffes aufweist, und daß zur Einhaltung des Mischungsverhältnisses das Injektionsvolumen des Additivstoffes durch die Steuereinrichtung mittels Regelung des Antriebes, insbesondere der Drehzahl eines Antriebsmotors, einem veränderlichen Volumenstrom des Grundstoffes anpaßbar ist. Die Injektion des Additivstoffes kann dabei kontinuierlich, intermittierend oder nach einem vorgegebenen Programm erfolgen. Entsprechend der Kolbenanzahl und dem Hubvolumen bei einer Axialkolbenpumpe wird je Umdrehung der Pumpentrommel ein genau definiertes Volumen des Additivstoffes angesaugt und ausgestoßen. Die Regulierung des Injektionsvolumens kann somit durch einfache Regelung des Rotationsantriebes der Axialkolbenpumpe erfolgen. Der Antrieb könnte dabei ein Elektromotor, ein Schrittmotor oder ein Verbrennungsmotor sein, deren Drehzahlen sich leicht und nahezu verzögerungsfrei regeln lassen. Die Axialkolbenpumpe ermöglicht es, daß selbst bei mobilen Tankfahrzeugen die Dosiervorrichtung mit einem sehr hohen Injektionsdruck mit über 2 x 10⁷ Pa betrieben werden kann. Bei Axialkolbenpumpen mit einer großen Anzahl von Kolben, übliche Axialkolbenpumpen weisen zwei, vier, sechs oder acht Hubkolben auf, kann ein quasi konstanter Injektionsdruck aufrechterhalten werden. Durch die gute Regelbarkeit des Injektionsvolumens des Additivstoffes und dem nahezu konstanten Injektionsdruck kann der Additivstoff einem veränderlichen Volumenstrom eines flüssigen oder gasförmigen Grundstoffes in einer hohen Dosiergenauigkeit zugeführt werden.

Bezüglich der Viskosität des Additivstoffes ist eine höhere Drehzahl, beispielsweise ca. 3000 U/min, besonders vorteilhaft. Für niedrige Dosierraten kann die Axialkolbenpumpe statt mit einer geringen Drehzahl intermittierend betrieben werden.

Eine erfindungsgemäße Weiterbildung der Dosiervorrichtung besteht darin, daß eine Meßeinrichtung in einem Leitungskanal, durch welchen der Volumenstrom des Grundstoffes fließt, zur kontinuierlichen Ermittlung von Volumenstromdaten angeordnet ist und mit der Steuereinrichtung in Verbindung steht und daß die Meßeinrichtung in Strömungsrichtung des Volumenstromes an einer Injektionsmündung des Additivstoffes angeordnet ist.

Durch das Anordnen eines Meßsensors in der Grundstoffleitung in der Nähe der Injektionsmündung wird auch bei starken Veränderungen des Volumenstromes des Grundstoffes, wie diese beispielsweise in der Anfangs- und Endphase von Abfüllvorgängen auftreten, sichergestellt, daß jeweils genau dem gemessenen Volumenstromteil das errechnete Additivstoffvolumen zugeführt wird. Somit wird jederzeit eine optimale, volumenproportionale Zumischung des Additivstoffes erreicht. Der additivierte Grundstoff ist somit nach dem Abfüllvorgang ohne eine zusätzliche mechanische Durchmischung oder eine Ruhezeit zur Selbstmischung weiter verwendbar.

Es ist eine vorteilhafte Ausgestaltung der Erfindung, daß die Schrägscheibe der Axialkolbenpumpe mittels einer Verstellmechanik schwenkbar ist und daß die Steuereinrichtung zur freien Einstellung des Injektionsvolumens und des Injektionsdruckes des Additivstoffes die Verstellmechanik und/oder die Drehzahl des Antriebsmotors steuert. Durch eine verstellbare Schrägscheibe kann das Hubvolumen der Kolben einer Axialkolbenpumpe verändert werden. Es ist somit durch die Verstellmechanik möglich, auch bei einer konstanten Antriebsdrehzahl der Axialkolbenpumpe das Injektionsvolumen zu regeln. Durch eine gleichzeitige Veränderung des Anstellwinkels der Schrägscheibe und der Antriebsdrehzahl wird eine sehr große Bandbreite zwischen einem minimalen und maximalen Injektionsvolumen erzielt.

In einer weiteren vorteilhaften Ausführungsform der Erfindung sind Temperatursensoren zur Messung der Temperatur des Grundstoffes und des Additivstoffes vorgesehen und die Steuereinrichtung temperaturkorrigierte Volumenstromdaten bestimmt. Die Steuereinrichtung weist hierfür einen Speicherbereich auf, in dem die Volumen-Temperatur-Funktionsgraphen einer Vielzahl von Grundstoffen und Additivstoffen abgespeichert sind. Die jeweils verwendeten Stoffe werden beispielsweise mittels einer Tastatur ausgewählt. Die Steuereinrichtung errechnet anhand der gemessenen Volumenstromdaten und der Additivstofftemperatur das notwendige Injektionsvolumen, welches zur Erreichung des vorgegebenen Mischungsverhältnisses bei Standardbedingungen erforderlich ist. Somit wird auch bei Temperaturschwankungen und großen Temperaturunterschieden zwischen dem Grundstoff und dem Additivstoff stets das gewünschte Mischungsverhältnis eingehalten.

Eine weitere vorteilhafte Ausführungsform der erfindungsgemäßen Dosiervorrichtung besteht darin, daß eine Heizung zur Regulierung der Temperatur des Additivstoffes vorgesehen ist. Die Heizung kann dabei im wesentlichen innerhalb des Vorratsbehälters und/oder in additivführenden Leitungen angeordnet sein oder als Teil der thermischen Isolierung diese umgeben. Die Heizung wird jeweils durch die Steuereinrichtung bei Unterschreiten einer Minimaltemperatur eingeschaltet oder bei Überschreiten einer Maximaltemperatur ausgeschaltet. Hierdurch wird vermieden, daß das Additiv zu weit abkühlt und auskristallisiert oder paraffiniert.

Bei einer weiteren Ausgestaltung der Erfindung ist es vorteilhaft, daß in einer Additivleitung zwei Temperatursensoren in Strömungsrichtung hintereinander angeordnet sind, welche als Strömungswächter geschaltet sind. Die Temperatursensoren sind dabei mit der Steuereinrichtung verbunden.

Die Sensoren können in Strömungsrichtung, vor oder hinter der Axialkolbenpumpe angeordnet sein. Ein Fühler befindet sich im Luftabscheider/- Pufferbehälter und somit in quasi ruhender Flüssigkeit. Hier wird die Temperatur des quasi ruhenden Mediums ermittelt. Der zweite Temperatursensor, der sich in der verjüngten Rohrleitung befindet und somit einer wesentlich höheren Strömungsgeschwindigkeit ausgesetzt ist, wird auf eine Temperatur aufgeheizt, die z.B. 20°C über der Additivtemperatur liegt. Wird die Flüssigkeit bewegt, so kühlt der zweite Temperatursensor ab. Die Energie, die aufgebracht werden muß, um Sensor 2 wieder auf die höhere Temperatur zu bringen, ist ein Maß für die Fließgeschwindigkeit des Mediums.

Bei einer Ausführungsform der Erfindung ist es weiterhin von Vorteil, daß die Steuereinrichtung einen Microcontroller aufweist, der über einen Analog/Digital-Wandler mit Sensoren verbunden ist, daß der Microcontroller den Antrieb, die Verstellmechanik der Schrägscheibe und die Heizung als Stellglieder steuert, und daß ein Bus-Interface vorgesehen ist. Über das Bus-Interface werden Vorgabeinformationen und Zustandsmeldungen bidirektional mit einer übergeordneten Steuereinheit ausgetauscht. Der Rechner übernimmt sämtliche Steuer- und Rechenfunktionen, während der Analog/Digital-Wandler die Analogsignale in rechnerkonforme Digitalsignale umwandelt.

Eine weitere vorteilhafte Ausführungsform der Erfindung besteht darin, daß ein Schaltventil an einer Zuführleitung zwischen der Injektionsmündung und der Axialkolbenpumpe vorgesehen ist. Vorzugsweise ist das Schaltventil ein elektronisch gesteuertes 3/2-Wegeventil, das so gesteuert wird, daß, wenn nicht injiziert wird, sich das Ventil im Sperrzustand befindet. Dies hat den Vorteil, daß sich bildende Stoßwellen nicht rückwärts durch die Pumpe Additiv befördern, was, wenn auch nur minimale Mengen befördert werden, zu einer Verfälschung des Meßwertes führen würde. Mit einem Stellorgan am Schaltventil kann der Volumenstrom des Additives zu einem Entnahmehahn umleitbar sein. Durch die Umstellung des Volumenstromes zu dem Entnahmehahn kann zu Eichzwecken programmgesteuert ein definiertes Soll-Injektionsvolumen entnommen werden. Mit einem Meßgefäß kann dann festgestellt werden, ob das von der Steuereinrichtung vorgegebene Soll-Injektionsvolumen auch mit dem tatsächlichen Injektionsvolumen am Pumpenausgang übereinstimmt. Das Schaltventil kann dabei vorteilhafterweise verplombt und/oder mit einer elektronischen Kontrollanzeige versehen werden, um ein unberechtigtes Betätigen des Schaltventiles zu verhindern. Des weiteren ist eine Detektoreinrichtung vorgesehen, welche erkennt, ob der Abgabeweg richtig eingestellt ist. Bei nicht ordnungsgemäßer Ventilstellung wird ein Warnsignal und/oder ein Sperrsignal abgegeben, um den Dosiervorgang zu unterbrechen.

Des weiteren ist es von Vorteil bei einer erfindungsgemäßen Dosiervorrichtung, daß die Additivzuleitung zwischen dem Vorratsbehälter und der Axialkolbenpumpe ein Schauglas mit Durchflußanzeiger, einen Luftabscheider, einen wechselbaren Filter und einen Leermelder aufweist. Durch das Schauglas mit Durchflußanzeiger und dem Leermelder wird sowohl eine optische als auch eine elektronische Abfüllkontrolle gewährleistet. Der Luftabscheider und der Filter verhindern, daß Luft- und Schmutzpartikel, welche eine einwandfreie Additivierung beeinträchtigen, in die Injektionseinrichtung gelangen.

Vorteilhafterweise weist die Dosiereinrichtung erfindungsgemäß im Bereich der Injektionsmündung in der Zuführleitung ein Rückschlagventil auf. Das Rückschlagventil erlaubt die Zuführung des Additivstoffes zu dem Volumenstrom des Grundstoffes, verhindert aber, daß Grundstoff in die Additivleitung eindringt. Das Rückschlagventil dient als reine Sicherungsmaßnahme, falls der Injektionsdruck unterhalb des Druckes des Volumenstromes des Grundstoffes absinken sollte. Das Rückschlagventil im Bereich der Injektionsmündung kann dabei auch als ein Teil einer ansteuerbaren Drossel oder Injektionsdüse ausgebildet sein und zur genauen Einstellung des Injektionsdruckes durch die Steuereinrichtung betätigt werden. Die Injektionsdüse kann dabei in den Leitungskanal des Grundstoffes hineinragen.

Bei einer Ausführungsform der Erfindung ist es weiterhin von Vorteil, daß die Axialkolbenpumpe als Pumpeneinheit mit einem Pumpeneinheits-Stecker lösbar angebracht ist, und daß an dem Pumpeneinheits-Stecker eine Codierung vorgesehen ist, durch welche die Steuereinrichtung einen eingesetzten Pumpentyp identifiziert und zugehörige Parameter zur Berechnung des Injektionsvolumens einstellt. Durch die Pumpeneinheit kann in einfacher Weise das Pumpenaggregat durch einen Pumpentyp mit verändertem Pumpenvolumen ausgetauscht werden. Durch die Codierung an der elektronischen Steckverbindung erkennt die Steuereinrichtung den Pumpentyp und stellt die zugehörigen Berechnungsparameter zum Festlegen des Injektionsvolumens ein. Die Pumpeneinheit kann neben der Axialkolbenpumpe auch den Motor und das zugehörige Servosystem umfassen.

Eine vorteilhafte Weiterbildung der Erfindung besteht darin, daß in der Zuführleitung ein Drucksensor vorgesehen ist, der mit der Steuereinrichtung verbunden ist. Durch unterschiedliche Druckverhältnisse in der Zuführleitung kann es zu unterschiedlichen Leckraten kommen, bei denen der Additivstoff rückwärts durch die Axialkolbenpumpe gedrückt wird. Die dadurch entstehenden Dosierfehler können bei Kenntnis des Druckes und der Viskosität des Additivstoffes kompensiert werden. Diese Kompensation kann anhand der vom Drucksensor ermittelten Werte durch die Steuereinrichtung ausgeführt werden.

Eine andere vorteilhafte Ausführungsform der Erfindung besteht darin, daß zumindest eine Viskositätskenngröße des Additivstoffes in die Steuereinrichtung eingebbar ist und daß ein aktueller Viskositätswert durch die Steuereinrichtung ermittelbar ist. Hierbei ist die Berücksichtigung der Viskosität des Additivstoffes bei der Korrektur des Dosierfehlers vorteilhaft, da sich neben dem Volumen auch die Viskosität mit der Temperatur ändert. Durch die ermittelten Temperaturwerte kann in der Steuereinrichtung der aktuelle Viskositätswert errechnet werden. Die Viskositätskenngröße kann über eine Tastatur oder eine Busankopplung eingegeben oder in einem EE-Prom abgelegt werden.

In einer anderen vorteilhaften Weiterbildung der Erfindung ist es vorteilhaft, daß die Axialkolbenpumpe durch die Steuereinrichtung den Additivstoff gemäß einem vorgegebenen Programm injiziert. Dieses Programm kann von einem Anwender aus einem Speicher der Steuereinrichtung ausgewählt werden. Hierbei kann beispielsweise das Additiv am Anfang der Abgabe oder an anderen bestimmten Zeitpunkten des Abgabevorganges zugeführt werden.

Weiterhin ist es vorteilhaft, daß mehrere Vorratsbehälter mit verschiedenen Additivstoffen vorgesehen sind, welche durch die Steuereinrichtung mittels einer Ventileinrichtung ansteuerbar und mit der Axialkolbenpumpe verbindbar sind. Wird nur eine Injektionsleitung verwendet, so kann durch rechtzeitige intelligente Umschaltung auf das Folgeadditiv und bei bekanntem Totvolumen (dem Volumen im Ansaugweg, Pumpe und Injetkionsleitung) der Additivfluß so gesteuert werden, daß zu Beginn des nächsten Abgabevorgangs bereits das neue Additiv an der Injektionsdüse ansteht, oder es wird zwischendurch mit dem Grundstoff gespült, um eine Vermischung zu vermeiden. Rechtzeitig zum nächsten Abgabevorgang steht dann wieder das gewünschte Additiv bereit.

Verfahrensmäßig wird die Aufgabe durch ein Verfahren zur dosierten Zuführung eines Additivstoffes zu einem veränderlichen Volumenstromes eines Grundstoffes, insbesondere beim Abfüllen von Heizöl aus einem mobilen Tankfahrzeug in einzelne Tanks, gelöst, bei dem eine Meßeinrichtung die Durchflußmenge des Grundstoffes ermittelt und eine Steuereinrichtung die Abhängigkeit von der Durchflußmenge eine Injektionseinrichtung zur Zuführung des Additivstoffes steuert, wobei die Meßeinrichtung kontinuierlich Volumenstromdaten ermittelt, die Injektionseinrichtung eine Axialkolbenpumpe ist, welche in Abhängigkeit von den ermittelten Volumenstromdaten eine Injektion des Additivstoffes bei einem Injektionsdruck erzeugt, der wesentlich größer ist als der Volumenstrom des Grundstoffes. Als eine Ursache für die gute Dosiergenauigkeit des erfindungsgemäßen Verfahrens kann angesehen werden, daß mit relativ großen Drücken, beispielsweise von ca. 2 x 10⁷ Pa, bei einer geringen Anzahl von Ventilen ein nahezu kontinuierlicher Additivstrom erzeugt wird. Der Pumpenkopf ist hierbei durch die Auslegung auf hohe Drücke besonders gut abgedichtet.

Eine vorteilhafte Weiterbildung des erfindungsgemäßen Verfahrens besteht darin, daß die Steuereinrichtung die Temperatur des Additivstoffes vor der Zuführung zu dem Grundstoff ermittelt und bei Unterschreiten einer Mindesttemperatur eine Heizung zur Erwärmung des Additivstoffes aktiviert und bei Überschreiten einer Maximaltemperatur die Heizung deaktiviert. Auf diese Weise wird die Viskosität des Additivstoffes auf einem möglichst konstanten Niveau gehalten, so daß stets ein genau bestimmtes Volumen injiziert wird.

Weiterhin besteht eine vorteilhafte Weiterbildung des erfindungsgemäßen Verfahrens darin, daß die Meßeinrichtung die Temperatur des Volumenstromes des Grundstoffes und/oder des Additivstoffes ermittelt und die Steuereinrichtung derart betätigt, daß diese ein temperaturkorrigiertes Injektionsvolumen des Additivstoffes dem Volumenstrom des Grundstoffes zuführt.

Nachfolgend wird die Erfindung beispielhaft anhand einer schematischen Zeichnung beschrieben.

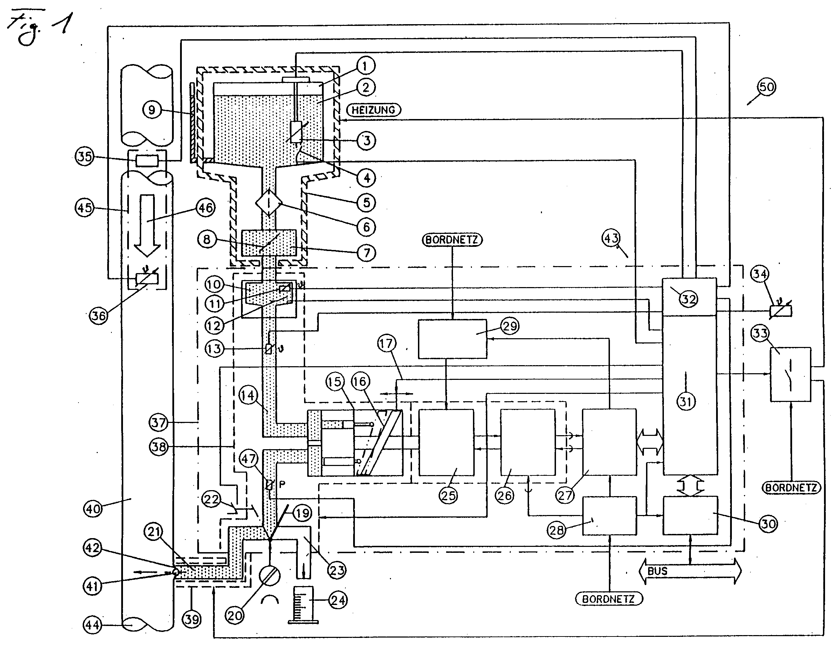

- Fig. 1: zeigt eine stark schematisierte Darstellung des Aufbaus und Funktionsprinzips einer Ausführungsform einer erfindungsgemäßen Dosiervorrichtung 50.

Die Dosiervorrichtung 50 weist einen Vorratsbehälter 1 auf, in dem eine größere Menge eines zu dosierenden Additivstoffes 2 bevorratet ist. Zur Überwachung des Füllstandes in dem Vorratsbehälter 1 ist ein Füllstandssensor 3 zur elektronischen Kontrolle und eine Füllstandsanzeige 9 mit Sichtfenster als optische Kontrolle des Füllstandes angeordnet. Bei dieser Ausführungsform ist der Füllstandssensor 3 als ein potentiometrischer Sensor ausgebildet. Am Boden des Vorratsbehälters 1 ist zusätzlich ein elektronischer Leermelder 4 angebracht, der ein Signal abgibt, wenn ein gewisser Mindestvorrat unterschritten wird.

Der Vorratsbehälter 1 ist über eine Additivzuleitung 14 mit einer Axialkolbenpumpe 15 verbunden. In der Additivzuleitung 14 sind bei diesem Ausführungsbeispiel ein austauschbarer Filter 6 vorgesehen, welcher zum Ausfiltern von körnigen Verunreinigungen dient. Weiterhin ist die Additivzuleitung 14 mit einem Schauglas 7 versehen, welches während dem Additivierungsvorgang einer Bedienperson erlaubt, den Additivstofffluß optisch zu kontrollieren. Mit dem Schauglas 7 ist es beispielsweise möglich, festzustellen, ob blasenfrei Additivstoff 2 aus dem Vorratsbehälter 1 angesaugt wird. Zu diesem Zwecke ist in der Additivzuleitung 14 ein drehbares Schaufelrad als Durchflußanzeiger 8 gut sichtbar hinter dem Schauglas 7 angebracht.

Zum Abscheiden dennoch vorhandener Luftblasen in dem Additivstoffstrom ist des weiteren ein Luftabscheider 10 in der Additivzuleitung 14 angeordnet. Der Luftabscheider 10 hat dabei bevorzugt eine größere Querschnittsfläche als die Additivstoffzuleitung 14. Der Luftabscheider 10 dient somit zugleich als Pufferbehälter während des Ansaugvorganges des Additivstoffes 2. Als eine zusätzliche Sicherung für eine einwandfreie Additivierung ist in dem Luftabscheider 10 ein elektronischer Leermelder 12 vorgesehen, der signalisiert, wenn der Pufferbehälter nicht mit Additivstoff 2 gefüllt ist.

Als elektronischer Strömungwächter sind zwei Temperatursensoren 11 und 13 hintereinander in der Additivzuleitung 14 angeordnet, deren Meßsignale zu einer Steuereinrichtung 43 übermittelt werden. Mittels der beiden Meßsignale kann das Vorhandensein eines Additivstoffstromes festgestellt und dessen Strömungsgeschwindigkeit ermittelt werden. Der Temperatursensor 11 befindet sich im Luftabscheider/- Pufferbehälter 10 und somit in quasi ruhender Flüsigkeit, um die Temperatur des quasi ruhenden Additives 2 zu ermitteln. Der zweite Temperatursensor 13, der sich in der verjüngten Rohrleitung 14 befindet und somit einer wesentlich höheren Strömungsgeschwindigkeit ausgesetzt ist, wird auf eine Temperatur aufgeheizt, die über der Additivtemperatur liegt. Durch die Additivstoffströmung kühlt der zweite Temperatursensor 13 ab. Die Energie, die aufgebracht werden muß, um diesen wieder auf die höhere Temperatur zu bringen, ist ein Maß für die Fließgeschwindigkeit des Additives 2. Der Vorratsbehälter 1 und die Additivzuleitung 14 sind thermisch isoliert.

Die Additivzuleitung 14 mündet in einen Einlaß der Axialkolbenpumpe 15. Die Axialkolbenpumpe 15 besteht aus einem rotierenden Zylinderblock und einer nichtrotierenden aber quer zur Rotationsachse schwenkbaren Schrägscheibe 16. In den Zylinderbohrungen des Zylinderblocks sind axial verschiebliche Kolben mit Kolbenstangen gelagert. Über einen nicht dargestellten Federmechanismus werden die freien Enden der Kolbenstangen auf einer Oberfläche der Schrägscheibe 16 niedergehalten. Durch die Rotation des Zylinderblocks gegenüber der feststehenden Schrägscheibe führen die Kolben die axiale Hubbewegung aus. Im Bereich des Additivstoffeinlasses weist die Schrägscheibe 16 von dem rotierenden Zylinderblock weg, wodurch eine Rückwärtsbewegung der Pumpenkolben und somit der Ansaugdruck in der Pumpe erzeugt wird. Im Bereich des Pumpenauslasses weist die Schrägscheibe 16 zu dem rotierenden Zylinderblock hin und erzwingt so eine Vorwärtsbewegung der Hubkolben und erzeugt den Ausstoßdruck.

Die Rotation der Zylindertrommel der Axialkolbenpumpe 15 wird durch einen Elektro-Motor 25 erzeugt. Zur Regelung der Drehzahl und des Drehmoments des Elektro-Motors 25 ist eine Motorregelelektronik 27 mit einem Servosystem 26 und einer Motorsteuerung-Leistungselektronik 29 vorgesehen. Die Axialkolbenpumpe 15, der Elektro-Motor 25 und das Servosystem 26 bilden eine Pumpeneinheit. Die Pumpeneinheit ist über Steckverbindungen lösbar mit den elektrischen und elektronischen Komponenten 27, 28, 29 verbunden. Neben der Drehzahlregulierung kann das Axialkolbenpumpenansaug- und -ausstoßvolumen durch eine Veränderung des Anstellwinkels der Schrägscheibe 16 variiert werden. Zur Lageveränderung der Schrägscheibe 16 ist eine Verstellmechanik 17 vorgesehen, die ebenso wie die Motorregelelektronik 27 durch die Steuereinrichtung 43 angesteuert wird.

Der Pumpenauslaß ist über eine Injektionsleitung 21 mit einem Leitungskanal 40 verbunden. In dem Leitungskanal 40 befindet sich ein Volumenstrom eines Grundstoffes 44, zu welchem der Additivstoff dosiert, zugeführt werden soll.

Entsprechend dem Mengenverhältnis zwischen dem Grundstoff 44 und dem Additivstoff 2 ist die Querschnittsfläche des Leitungskanals 40 wesentlich größer als die Querschnittsfläche der Injektionsleitung 21. Im Bereich einer Injektionsmündung 42 ist die Injektionsleitung 21 quer zum Leitungskanal 40 angeordnet, so daß der Additivstoff 2 im wesentlichen senkrecht zur Strömungsrichtung 46 des Grundstoffes 44 in den Leitungskanal 40 eingespritzt wird. An der Injektionsmündung 42 ist ein Rückschlagventil 41 vorgesehen, welches verhindert, daß bei einem Druckabfall des Injektionsdruckes Grundstoff 44 in die Injektionsleitung 21 eindringen kann. Zusätzlich ist das Rückschlagventil 41 als eine Injektionsdüse ausgebildet, welche für eine gleichmäßige Zerstäubung des Additivstoffes 2 in dem Grundstoff 44 sorgt.

An der Injektionsleitung 21 ist ein durch einen Steller 20 betätigbares Schaltventil 19 vorgesehen, mit welchem der gesamte Injektionsstrom des Additivstoffes 2 von der Axialkolbenpumpe 15 zu einem Entnahmehahn 23 umleitbar ist. Über diesen Entnahmehahn 23 kann beispielsweise eine Eichprobe in einen Meßbecher 24 abgegeben werden, um die korrekte Funktionsweise der Dosiervorrichtung 50 zu überprüfen. Gegen unberechtigtes Betätigen ist der Steller 20 verplombbar und mit einem Überwachungsschalter 22 als Teil einer Detektoreinrichtung gesichert.

Um den Additivstoff 2 in einer hohen Dosiergenauigkeit in den Volumenstrom des Grundstoffes 44 zu injizieren, ist eine Meßeinrichtung 45 in Strömungsrichtung 46 des Grundstoffes 44 vor der Injektionsmündung 42 der Injektionsleitung 21 angeordnet. Die Meßeinrichtung 45 dient zur Ermittlung von Volumenstromdaten des Grundstoffes 44, welche für eine genaue Dosierung des Additivstoffes 2 notwendig sind. Bei diesem Ausführungsbeispiel besteht die Meßeinrichtung 45 aus einem Durchflußsensor 35 und einem Temperatursensor 36. Zur Berechnung einer temperaturkompensierten Durchflußmenge des Grundstoffes 44 werden die Meßsignale der Meßeinrichtung 45 zur Steuereinrichtung 43 geleitet. Die Steuereinrichtung 43 weist einen Microcontroller 31 und einen Analog/Digital-Wandler 32 auf. Der Analog/Digital-Wandler 32 wandelt die Analogsignale der in der Dosiervorrichtung 50 eingesetzten Sensoren in rechnerkonforme Digitalsignale um. Anhand der von der Meßeinrichtung 45 ermittelten Meßsignale berechnet der Microcontroller 31 das zur Erreichung des eingegebenen Mischungsverhältnisses notwendige Injektionsvolumen des Additivstoffes 2. Der Microcontroller 31 gibt zur Einstellung des exakten Injektionsvolumens entsprechende Steuersignale an die Motorregelelektronik 27 und die Verstellmechanik 17 aus. Der gesamte Vorgang der Meßwertverarbeitung, Pumpenansteuerung und Ausstoß der exakt bestimmten Additivstoffmenge an der Injektionsmündung 42 ist dabei so eingestellt, daß die Additivstoffmenge genau dem Volumenstromsegment des Grundstoffes 44 zugeführt wird, bei welchem die Meßwerte zuvor an der Meßeinrichtung 45 ermittelt wurden. Somit ist selbst bei stark veränderlichen Volumenströmen des Grundstoffes 44 eine stets exakte Additivierung entsprechend dem vorgegebenen Mischungsverhältnis gewährleistet.

Die Steuereinrichtung 43 ist des weiteren mit Temperatursensoren 11 und 13 zur Messung der Additivstofftemperatur und einem Temperatursensor 34 zur Messung der Umgebungstemperatur verbunden. Bei Unterschreiten einer vorgegebenen Minimaltemperatur steuert der Microcontroller 31 eine Regeleinrichtung 33 an, welche für eine Aktivierung von Heizelementen 5, 38 und 39 an dem Vorratsbehälter 1, der Additivzuleitung 14 bzw. der Injektionsleitung 21 sorgt. Die Heizungen 5, 38 und 39 sind in diesem Ausführungsbeispiel in Isolierungen integriert. Über den Temperaturfühler 34 kann auch auf eine sinkende Umgebungstemperatur rechtzeitig reagiert werden, um der Unterkühlung des Additivstoffes 2 und damit einer Auskristallisierung vorbeugend entgegenzuwirken. Zudem ist die Steuereinrichtung mit einem Drucksensor 47 in der Zuführleitung 21 verbunden.

Der Microcontroller 31 weist weiterhin ein Bus-Interface 30 auf, über das Vorgabeinformationen und Zustandsmeldungen bidirektional mit einer übergeordneten Steuereinheit ausgetauscht werden. Als stand-alone-System kann der Microcontroller 31 mit Hilfe der Signale vom Durchflußsensor 35 und des Temperatursensors 36 die Additivierung selbständig durchführen. Die Vorgaben werden dabei über eine nicht dargestellte Tastatur eingegeben und Zustandsmeldungen zum Anzeigen an ein Display (nicht dargestellt) ausgegeben.

Die einzelnen elektronischen Komponenten werden über ein Netzteil 28 mit elektrischer Energie von einem externen Netz versorgt. Bei diesem Ausführungsbeispiel für ein mobiles Tankfahrzeug ist hierfür das elektrische Bordnetz vorgesehen. Zum Schutz vor Umgebungseinflüssen wird die Dosiervorrichtung 50 von einem Gehäuse 37 umschlossen.

Anhand des vorstehenden Ausführungsbeispieles wurde gezeigt, daß mit der erfindungsgemäßen Dosiervorrichtung selbst bei stark veränderlichen Volumentströmen eines zu additivierenden Grundstoffes als auch bei welchselnden Umgebungsbedingungen eine sehr hohe Dosiergenauigkeit bei der Zuführung eines Additivstoffes möglich ist. Die Erfindung ist damit sowohl für einen stationären Betrieb als auch für einen mobilen Einsatz von Tankfahrzeugen etc. sehr gut geeignet. Aufgrund der erreichbaren sehr hohen Dosiergenauigkeit kann die erfindungsgemäße Dosiervorrichtung bei allen Anwendungen etwa bei chemischen, pharmazeutischen oder lebensmitteltechnischen Verfahren eingesetzt werden, bei denen einem Volumenstrom eines Grundstoffes eine genau definierte Menge eines Additivstoffes zugesetzt werden muß. Mit der Erfindung ist es nunmehr möglich, zeit- und kostenintensive Dosier- und Mischungsvorgänge, die bisher aufgrund der geforderten Dosier- und Mischungsgenauigkeit separat ausgeführt werden mußten, zeitgleich mit einem Abfüllvorgang auszuführen.

## Patentansprüche

1. Dosiervorrichtung zur Zuführung eines Additivstoffes (2) in einen Volumenstrom eines Grundstoffes (44), insbesondere zur Additivierung eines Additivstoffes (2) beim Abfüllen von Heizöl aus einem mobilen Tankfahrzeug in Tanks, mit einer Injektionseinrichtung, welche den Additivstoff (2) aus einem Vorratsbehälter (1) dem Volumenstrom des Grundstoffes (44) in einem vorgebbaren Mischungsverhältnis zuführt, und einer Steuereinrichtung (43), welche das zu injizierende Volumen des Additivstoffes (2) in Abhängigkeit von dem Volumenstrom des Grundstoffes (44) bestimmt und regelt, dadurch **gekennzeichnet,** daß die Injektionseinrichtung eine Axialkolbenpumpe (15) mit Schrägscheibe (16) aufweist, daß die Axialkolbenpumpe (15) einen Antrieb für eine Injektion des Additivstoffes (2) aufweist, und daß zur Einhaltung des Mischungsverhältnisses das Injektionsvolumen des Additivstoffes (2) durch die Steuereinrichtung (43) mittels Regelung des Antriebes, insbesondere eines Antriebsmotors (25), einem veränderlichen Volumenstrom des Grundstoffes (44) anpaßbar ist.

2. Dosiervorrichtung nach Anspruch 1,
dadurch **gekennzeichnet,**
daß eine Meßeinrichtung (45) in einem Leitungskanal (40), durch welchen der Volumenstrom des Grundstoffes (44) fließt, zur kontinuierlichen Ermittlung von Volumenstromdaten angeordnet ist und mit der Steuereinrichtung (43) in Verbindung steht und
daß die Meßeinrichtung (45) in Strömungsrichtung (46) des Volumenstromes des Grundstoffes (44) an einer Injektionsmündung (42) des Additivstoffes (2) angeordnet ist.

3. Dosiervorrichtung nach Anspruch 2 oder 3,
dadurch **gekennzeichnet,**
daß die Schrägscheibe (16) der Axialkolbenpumpe (15) mittels einer Verstellmechanik (17) schwenkbar ist, und
daß zur freien Einstellung des Injektionsvolumens und des Injektionsdruckes des Additivstoffes (2) die Verstellmechanik (17) und/oder die Drehzahl des Antriebsmotors (25) durch die Steuereinrichtung (43) regelbar ist.

4. Dosiervorrichtung nach einem der Ansprüche 1 bis 3,
dadurch **gekennzeichnet,**
daß Temperatursensoren (11, 13, 36) zur Messung der Temperatur des Additivstoffes (2) und des Grundstoffes (44) vorgesehen sind, und
daß durch die Steuereinrichtung (43) temperaturkorrigierte Volumenstromdaten bestimmbar sind.

5. Dosiervorrichtung nach einem der Ansprüche 1 bis 4,
dadurch **gekennzeichnet,**
daß eine Heizung (5, 38, 39) zur Regulierung der Temperatur des Additivstoffes (2) vorgesehen ist.

6. Dosiervorrichtung nach einem der Ansprüche 1 bis 5,
dadurch **gekennzeichnet,**
daß in einer Additivleitung (14, 21) zwei Temperatursensoren (11, 13) in Strömungsrichtung des Additivstoffes (2) hintereinander angeordnet sind, welche als Strömungswächter geschaltet sind.

7. Dosiervorrichtung nach einem der Ansprüche 5 oder 6,
dadurch **gekennzeichnet,**
daß die Steuereinrichtung (43) einen Microcontroller (31) aufweist, der über einen Analog/Digital-Wandler (32) mit Sensoren (3, 11, 12, 13, 22, 34, 35, 36, 47) verbunden ist und daß der Microcontroller (31) den Antrieb, die Verstellmechanik (17) der Schrägscheibe (16) und die Heizung (5, 38, 39) als Stellglieder steuert.

8. Dosiervorrichtung nach einem der Ansprüche 1 bis 7,
dadurch **gekennzeichnet,**
daß ein Schaltventil (19) an einer Zuführleitung (21) zwischen einer Injektionsmündung (42) und der Axialkolbenpumpe (15) vorgesehen ist.

9. Dosiervorrichtung nach Anspruch 8,
dadurch **gekennzeichnet,**
daß das Schaltventil (19) durch einen Steller (20) zur Umleitung des Volumenstromes des Additivstoffes (2) zu einem Entnahmehahn (23) betätigbar ist und daß der Steller (20) verplombbar ist.

10. Dosiervorrichtung nach Anspruch 8 oder 9,
dadurch **gekennzeichnet,**
daß eine Detektoreinrichtung zur Erkennung der Stellung des Schaltventils (19) vorgesehen ist, welche bei nicht ordnungsgemäßer Stellung ein Warnsignal und/oder ein Sperrsignal abgibt.

11. Dosiervorrichtung nach einem der Ansprüche 6 bis 10,
dadurch **gekennzeichnet,**
daß eine Additivzuleitung (14) zwischen dem Vorratsbehälter (1) und der Axialkolbenpumpe (15) ein Schauglas (7) mit Durchflußanzeiger (8), einen Luftabscheider (10), einen wechselbaren Filter (6) und einen Leermelder (12) aufweist.

12. Dosiervorrichtung nach einem der Ansprüche 8 bis 11,
dadurch **gekennzeichnet,**
daß im Bereich der Injektionsmündung (42) in der Zuführleitung ein Rückschlagventil (41) angeordnet ist.

13. Dosiervorrichtung nach einem der Ansprüche 1 bis 12,
dadurch **gekennzeichnet,**
daß die Axialkolbenpumpe (15) als Pumpeneinheit mit einer elektronischen Steckverbindung lösbar angebracht ist, und
daß an der elektronischen Steckverbindung eine Codierung vorgesehen ist, durch welche die Steuereinrichtung (43) einen eingesetzten Pumpentyp identifiziert und zugehörige Parameter zur Berechnung des Injektionsvolumens einstellt.

14. Dosiervorrichtung nach einem der Ansprüche 8 bis 13,
dadurch **gekennzeichnet,**
daß in der Zuführleitung (21) ein Drucksensor (47) vorgesehen ist, der mit der Steuereinrichtung (43) verbunden ist.

15. Dosiervorrichtung nach einem der Ansprüche 1 bis 14,
dadurch **gekennzeichnet,**
daß zumindest eine Viskositätskenngröße des Additivstoffes (2) in die Steuereinrichtung (43) eingebbar ist und
daß ein aktueller Viskositätswert durch die Steuereinrichtung (43) ermittelbar ist.

16. Dosiervorrichtung nach einem der Ansprüche 1 bis 15,
dadurch **gekennzeichnet,**
daß die Axialkolbenpumpe (15) durch die Steuereinrichtung (43) den Additivstoff (2) gemäß einem vorgegebenen Programm injiziert.

17. Dosiervorrichtung nach einem der Ansprüche 1 bis 16,
dadurch **gekennzeichnet,**
daß mehrere Vorratsbehälter (1) mit verschiedenen Additivstoffen (2) vorgesehen sind, welche durch die Steuereinrichtung (43) mittels einer Ventileinrichtung ansteuerbar und mit der Axialkolbenpumpe (15) verbindbar sind.

18. Verfahren zur dosierten Zuführung eines Additivstoffes (2) zu einem veränderlichen Volumenstrom eines Grundstoffes (44), insbesondere beim Abfüllen von Heizöl aus einem mobilen Tankfahrzeug in einzelne Tanks, bei dem eine Meßeinrichtung (45) die Durchflußmenge des Grundstoffes (44) ermittelt und eine Steuereinrichtung (43) in Abhängigkeit von der Durchflußmenge eine Injektionseinrichtung zur Zuführung des Additivstoffes (2) steuert,
dadurch **gekennzeichnet,**
daß die Meßeinrichtung (45) kontinuierlich Volumenstromdaten ermittelt, daß die Injektionseinrichtung eine Axialkolbenpumpe (15) ist, welche in Abhängigkeit von den ermittelten Volumenstromdaten eine Injektion des Additivstoffes (2) bei einem Injektionsdruck erzeugt, der wesentlich größer ist als der Druck des Volumenstromes des Grundstoffes (44).

19. Verfahren nach Anspruch 18,
dadurch **gekennzeichnet,**
daß die Steuereinrichtung (43) die Temperatur des Additivstoffes (2) vor der Zuführung zu dem Grundstoff (44) ermittelt, und bei Unterschreiten einer Mindesttemperatur eine Heizung (5, 38, 39) zur Erwärmung des Additivstoffes (2) aktiviert und bei Überschreiten einer Maximaltemperatur die Heizung (5, 38, 39)deaktiviert.

20. Verfahren nach Anspruch 18 oder 19,
dadurch **gekennzeichnet,**
daß die Meßeinrichtung (45) die Temperatur des Volumenstromes des Grundstoffes (44) und/oder des Additivstoffes (2) ermittelt und die Steuereinrichtung (43) derart betätigt, daß diese ein temperaturkorrigiertes Injektionsvolumen des Additivstoffes (2) dem Volumenstrom des Grundstoffes (45) zuführt.
